# EUROPÄISCHE PATENTSCHRIFT

(11) **EP 3 535 115 B1**
(45) Veröffentlichungstag und Bekanntmachung des Hinweises auf die Patenterteilung: **23.03.2022**
(21) Anmeldenummer: 17793932.9
(22) Anmeldetag: 01.11.2017
(51) Int. Cl.: B29D 99/00, F03D 1/06, B29C 70/52, B29L 31/08

(54) **ROTORBLATT MIT GEKRÜMMTEN PULTRUDATEN UND VERFAHREN ZUR HERSTELLUNG DES SELBEN**
ROTOR BLADE HAVING CURVED PULTRUDED PRODUCTS AND METHOD FOR THE PRODUCTION THEREOF
PALE DE ROTOR COURBE COMPORTANT DES PRODUITS PULTRUDÉS, ET PROCÉDÉ DE FABRICATION DE LADITE PALE

(30) Priorität: 03.11.2016 DE 102016013064
(43) Veröffentlichungstag der Anmeldung: 11.09.2019
(73) Patentinhaber: Siemens Gamesa Renewable Energy Service GmbH, 20097 Hamburg (DE)
(72) Erfinder: TREDE, Alf, 25885 Immenstedt (DE)
(74) Vertreter: Groth, Wieland
(86) Internationale Anmeldenummer: PCT/EP2017/077961
(87) Internationale Veröffentlichungsnummer: WO 2018/083118

(56) Entgegenhaltungen:
- EP-A1- 3 029 314
- GB-A- 2 497 578

## Beschreibung

Die Erfindung betrifft ein Verfahren zur Herstellung eines Rotorblattes sowie ein Rotorblatt. Üblicherweise werden Rotorblätter in Laminierverfahren hergestellt. Dazu werden Gelegeund/oder Gewebelagen, möglicherweise auch Balsa und/oder Schäume, in eine Formhalbschale eingebracht und an bestimmten Stellen durch in Längsrichtung verlaufende Pultrudate verstärkt. Die Pultrudate bilden insbesondere die Haupt- und Hinterkantengurte aus. Bei Pultrudaten handelt es sich um Strangziehkunststoffprofile, die über ihre gesamte Längsausdehnung einen gleichbleibenden Querschnitt aufweisen und die selbst faserverstärkt sind und eine hohe Reißfestigkeit in Längsrichtung aufweisen. Als Fasern für die Gurte werden bevorzugt Glas-, Carbon-, Aramid-, Basalt- oder Naturfasern verwendet. Die Gurte können separat oder zusammen mit der Rotorblatthalbschale gefertigt werden.

Üblicherweise werden die Rotorblätter aus zwei Rotorblatthalbschalen gefertigt, es sind natürlich auch andere Fertigungsverfahren denkbar. Jede Rotorblatthalbschale wird beispielsweise in einem Infusionsverfahren gefertigt.

Es hat sich herausgestellt, dass die in die Formhalbschalen oder Gurtformen eingelegten Pultrudate während des Infusionsverfahrens zu Verformungen gezwungen werden und durch die Infusion, bei der sich das aus Gewebelage und Pultrudaten gebildete Halbzeug durch ein Harzsystem aushärtet, intrinsische Spannungen des Pultrudates eingefroren werden und die mechanische Stabilität des Rotorblattes senken.

Aus der EP 3 029 314 A1 ist ein Herstellungsverfahren für Gurte bekannt, bei dem schmale Pultrudate mit seitlichen Verschachtelungsmechanismen versehen werden, die es ermöglichen, den Gurt senkrecht zur Längsrichtung zu krümmen. Nachteiligerweise sind die Verschachtelungsmechanismen nur kostenträchtig herstellbar und die einzelnen Pultrudate sind relativ schmal.

Es ist in einem ersten Aspekt Aufgabe der vorliegenden Erfindung, ein Herstellungsverfahren für ein Rotorblatt zur Verfügung zu stellen, das die oben genannten Nachteile vermeidet, zumindest verringert und es ist in einem zweiten Aspekt Aufgabe der vorliegenden Erfindung, ein Rotorblatt zur Verfügung zu stellen, das eine höhere mechanische Stabilität aufweist.

Die Aufgabe wird in ihrem ersten Aspekt durch ein Verfahren mit den Merkmalen des Anspruchs 1 gelöst.

Erfindungsgemäß wird wenigstens ein Pultrudat in einem herkömmlichen Strangziehverfahren gezogen, es wird wenigstens eine Formhalbschale zur Verfügung gestellt, günstigerweise wobei jede der Formhalbschalen zur Fertigung einer Rotorblatthalbschale verwendet wird. Der Begriff der Halbschale ist breit zu verstehen, er kann auch Teilschalen umfassen, insbesondere auch exakte Halbschalen.

Gurte, insbesondere Haupt-, aber auch Hinterkantengurte sind zusammen mit der Rotorblatthalbschale oder separat herstellbar. Im zweiten Fall werden sie später auf eine Innenseite der Rotorblatthalbschale aufgebracht, insbesondere aufgeklebt.

In die wenigstens eine Formhalbschale werden Lagen eingelegt, und das wenigstens eine Pultrudat wird entlang einer Längsrichtung der wenigstens einen Formhalbschale in die Formhalbschale eingelegt. Die Lagen und das Pultrudat können in verschiedenen Schichtungen und auf verschiedene Weisen in die Formhalbschale eingelegt werden, es ist beispielsweise denkbar, dass zunächst einige Lagen, wobei es sich um Gewebe- oder Gelegelagen oder Mischungen von beidem handelt, auf die Formhalbschale aufgelegt werden, dann das wenigstens eine Pultrudat zur Ausbildung eines Haupt- und/oder Hinterkantengurtes in die Formhalbschale auf die bereits aufgelegten Lagen aufgelegt wird und weitere Lagen über die bereits eingelegten Lagen und Pultrudate gelegt werden. In den Lagen können bereichsweise, streifenweise oder als vollständige Lagen Balsa, Schäume oder Sperrholz verwendet werden. Es sind jedoch auch andere Schichtungen denkbar, beispielsweise dass das Pultrudat direkt auf die Formhalbschale aufgelegt wird. Die aufeinandergeschichteten Lagen und Pultrudate werden in einem anschließenden Laminierverfahren zusammen zu einem Faserverbundbauteil verklebt.

Es kann auch vorgesehen sein, die Pultrudate zunächst separat zur Verfügung zu stellen und separat in einem Infusionsverfahren zu einem Gurt durch vorzugsweise Infusionsverfahren zu fertigen. Dann wird der fertige Gurt auf eine Innenseite einer ebenfalls bereits infundierten Rotorblatthalbschale aufgelegt, insbesondere mit ihr verklebt.

Erfindungsgemäß ist vorgesehen, dass die Pultrudate, die üblicherweise als im Querschnitt rechteckige, vorzugsweise exakt rechteckige, faserverstärkte Kunststoffteile zur Verfügung gestellt werden, bereits während der Herstellung des Pultrudates mit einer Krümmung versehen werden, wobei die Krümmung senkrecht zur Längsrichtung des Pultrudates, die der Ziehrichtung des Pultrudates im Strangziehverfahren entspricht, gefertigt wird. Die Krümmung des Pultrudates sollte, da das Pultrudat in einem kontinuierlichen Strangziehverfahren hergestellt wird, über die gesamte Längsausdehnung des Pultrudates gleichbleibend ausgebildet sein.

Das wenigstens eine Pultrudat wird in Längsrichtung der Formhalbschale in die Formhalbschale gelegt, vorzugsweise zur Ausbildung des Hauptgurtes, aber auch möglichweise zur zusätzlichen oder anstatt dessen zur Ausbildung des Hinterkantengurtes oder eines anderes Gurtes. Dadurch, dass das Pultrudat eine Krümmung in Richtung seiner quer, vorzugsweise senkrecht zur Längsrichtung ausgebildeten Breite aufweist, wird eine intrinsische Spannung des Pultrudates die sich während und nach dem Laminierverfahren aufbaut, gesenkt. Es hat sich gezeigt, dass während des Laminierverfahrens die im Querschnitt rechteckigen Pultrudate an die Krümmung der Formhalbschale gesogen werden und dadurch erst während des Laminierverfahrens eine Krümmung erfahren. Während des Aushärtens des Harzsystems wird diese Spannung des Pultrudates gleichsam konserviert und führt zu einer Herabsetzung der mechanischen Stabilität des Rotorblattes oder zum Bruch. Hier setzt die Erfindung an, indem bereits gekrümmte Pultrudate verwendet werden, wodurch die auch im und nach dem Laminierverfahren erzeugte Spannung im Pultrudat deutlich gemindert und in Abschnitten auch beinahe vollständig auf null herabgesetzt wird, in denen die vorgegebene Krümmung des Pultrudates der Krümmung der Rotorblatthalbschale exakt oder zumindest im Wesentlichen entspricht.

Erfindungsgemäß ist die Krümmung des wenigstens einen Pultrudates der Krümmung der Rotorblatthalbschale angepasst. Es kann beispielsweise eine durchschnittliche Krümmung in Richtung einer Profilsehne der Rotorblatthalbschale im Bereich der Auflagefläche des Pultrudates über die gesamte Längsausdehnung der Rotorblatthalbschale bestimmt werden, und es wird dann eine entsprechende Formmatrize ausgewählt und in die Strangziehmaschine eingebaut, die die Pultrudate mit der bestimmten Krümmung entlang ihrer Breite im Querschnitt fertigt.

Das Pultrudat wird vorzugsweise als Streifen gleichbleibender Breite und Dicke, vorzugsweise in einer Strangziehmaschine gezogen. Vorzugsweise bleibt auch die Krümmung entlang der Breite über die gesamte Längsausdehnung gleich. Die Krümmung kann entlang der Breite an verschiedenen Stellen des Pultrudates verschieden sein. Sie muss nicht exakt einer Kreisform entsprechen. Sie kann z. B. auch in Richtung zumindest einer Längskante hin geringer werden.

Die Krümmung des Pultrudates ist der Krümmung der Rotorblatthalbschale entlang der Auflagefläche des Gurtes angepasst. Vorzugsweise ist die Krümmung des Pultrudates so gewählt, dass das Pultrudat in einigen Querschnitten der Rotorblatthalbschale der Krümmung der Rotorblatthalbschale exakt entspricht, in anderen Querschnitten können Abweichungen der Krümmung der Rotorblatthalbschale und des nicht eingebauten Pultrudates vorhanden sein. Unter entsprechen ist hier zu verstehen, dass die Krümmungen gleich sind. Das Pultrudat wird dann unter Spannung auf die durch das Rotorblatt vorgegebene Krümmung gezwungen. Jedoch sind diese Abweichungen im Durchschnitt vorzugsweise deutlich geringer als bei einem Pultrudat mit einem rechteckigen Querschnitt.

Vorzugsweise liegt die Krümmung des Pultrudates bei κ ≥ 1 *m*⁻¹.

Das Pultrudat kann als Hauptgurt, aber auch als Hinterkantengurt oder als sonstiger Gurt verwendet werden.

In einem zweiten Aspekt wird die Aufgabe durch ein Rotorblatt mit den Merkmalen des Anspruchs 9 erfüllt.

Das erfindungsgemäße Rotorblatt kann durch eines der oben genannten Verfahren hergestellt werden.

Das Rotorblatt umfasst zwei Rotorblatthalbschalen und mindestens einen Gurt entlang der Längsrichtung jeder der beiden Rotorblatthalbschalen. Bei dem Gurt kann es sich um einen Hauptgurt oder auch um einen Hinter- oder Vorderkantengurt handeln.

Der Gurt ist aus einem Pultrudat gebildet, das vor dem Einlaminieren in die Rotorblatthalbschale senkrecht zur Längsrichtung eine Krümmung aufweist. Wie oben beschrieben, führt die Krümmung dazu, dass die während des Laminierverfahrens eingefrorene Spannung des Pultrudates gegenüber herkömmlichen Pultrudaten mit rechteckigem Querschnitt verringert wird.

Erfindungsgemäß ist die Krümmung des Pultrudates einer Krümmung der Rotorblatthalbschale senkrecht zur Längsrichtung angepasst, wobei angepasst hier meint, dass sie nicht entlang der gesamten Längsausdehnung überall exakt der Krümmung der Rotorblatthalbschale entsprechen muss, da die Krümmung der Rotorblatthalbschale über die Längsrichtung variiert, aber es können Durchschnittswerte der Krümmung der Rotorblatthalbschale bestimmt werden, und die Krümmung des Pultrudates kann diesem Durchschnittswert angepasst, vorzugsweise diesem Durchschnittswert gleichgesetzt werden. Dadurch ist es insbesondere möglich, ein Pultrudat in einem kontinuierlichen Strangziehverfahren herzustellen und das Pultrudat in einem Stück in die Rotorblatthalbschale einzubetten.

Die Erfindung wird anhand eines Ausführungsbeispiels in vier Figuren beschrieben. Dabei zeigen:
- Fig. 1: eine schematische Ansicht einer Strangziehmaschine,
- Fig. 2: eine Schnittansicht eines herkömmlichen Pultrudates in einer herkömmlichen Fertigungsform,
- Fig. 3: eine Ansicht eines erfindungsgemäßen Pultrudates in der herkömmlichen Fertigungsform,
- Fig. 4: eine perspektivische Ansicht eines in eine Rotorblatthalbschale eingelegten Pultrudates.

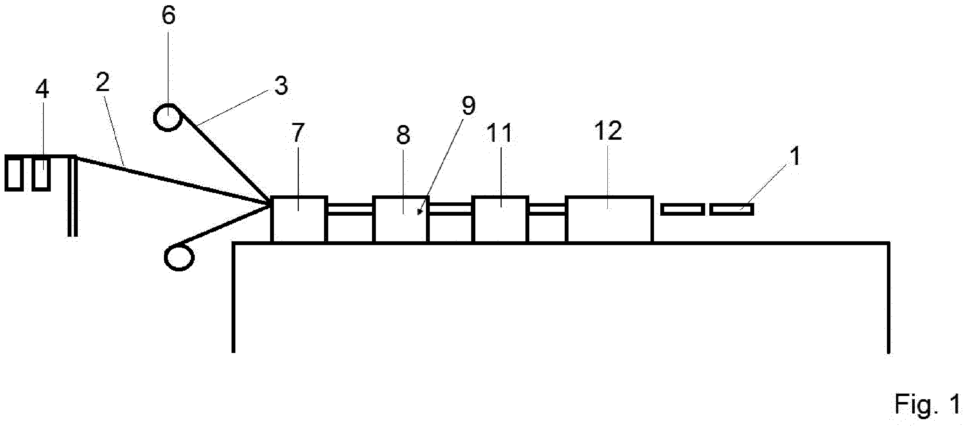

Die in Fig. 1 dargestellte Strangziehmaschine dient zum Strangziehen eines faserverstärkten Kunststoffprofils, wobei der Kunststoff in Form eines Harzes um Fasern 2 und/oder Matten 3 angelagert wird. Derartige Kunststoffprofile werden auch Pultrudate 1 genannt. Die einzelnen Fasern 2 werden als Glasfasern, Kohlefasern und von vorzugsweise vertikal gelagerten Faserspindeln 4 abgewickelt. Die Fasern 2 können zusammen mit Verstärkungsmaterialen wie Matten 3 oder Vliese, die auf entsprechenden vorzugsweise horizontal gelagerten Rollen 6 angeordnet sind, gemeinsam als Bündel einer Harzwanne und Vorformstation 7 zugeführt werden. Es ist vorzugsweise vorgesehen, dass die Fasern 2 nur unidirektional angeordnet sind. Es kann aber auch vorgesehen sein, dass nur Fasern und/oder nur Matten oder Vliese als Verstärkungsmaterial des Pultrudates 1 verwendet werden.

In der in Fig. 1 dargestellten Strangziehmaschine zur Herstellung von Pultrudaten 1 werden sowohl Fasern 2 als auch Matten 3 zur Verstärkung der Pultrudate 1 verwendet. Die Matten 3 und Fasern 2 werden zunächst durch eine Harzwanne und Vorformstation 7 gezogen. Dabei lagert sich flüssiges Harz um die Fasern 2 herum an. Das um die Fasern 2 herumgelagerte Harz wird zusammen mit den Fasern 2 und Matten 3 in ein Härtungswerkzeug 8 hineingezogen. In dem Härtungswerkzeug 8 ist eine Formmatrize 9 vorgesehen, die dem Pultrudat 1 die gewünschte, vorzugsweise gekrümmte Querschnittsform gibt. Der Querschnitt des Pultrudates 1 ist über die gesamte Längsausdehnung, die der Ziehrichtung entspricht, gleichbleibend. In dem Härtungswerkzeug 8 wird das Harzmaterial gehärtet, indem dem Harz, das ein Zweikomponentensystem sein kann, Wärme zugeführt wird. Die Ziehgeschwindigkeit und die Wärme sind so aufeinander abgestimmt, dass das Pultrudat 1 nach dem Verlassen des Härtungswerkzeuges 8 seine endgültige Festigkeit erreicht hat und ausgehärtet ist und auch durch nachträgliches Erwärmen keine weitere Vernetzung des Harzes stattfindet. Das Pultrudat 1 ist im Prinzip ein endloses Strangziehteil, das mittels eines Ziehwerkzeuges 11 kontinuierlich aus dem Härtungswerkzeug 8 herausgezogen wird und anschließend in einer Sägemaschine 12 auf eine gewünschte Länge geschnitten werden kann. Es ist aber auch denkbar, dass das Pultrudat 1 in einem Stück auf einer Rolle aufgewickelt wird und der weiteren Verwendung zugeführt wird.

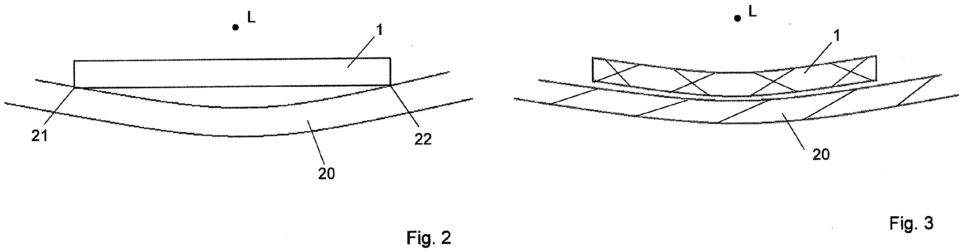

Fig. 2 zeigt schematisch eine herkömmliche Formhalbschale 20 einer Rotorblatthalbschale in einem Querschnitt und ein darauf aufgelegtes Pultrudat 1. Eine Längsrichtung L des Pultrudates 1 steht senkrecht auf der Zeichenebene. Pultrudate 1 dienen herkömmlicherweise insbesondere zur Ausbildung von Hauptgurten, die in Längsrichtung L des Rotorblattes von der Rotorblattwurzel zum Tip des Rotorblattes verlaufen. Pultrudate 1 können auch zur Ausbildung von Hinterkantengurten oder anderen Gurten verwendet werden.

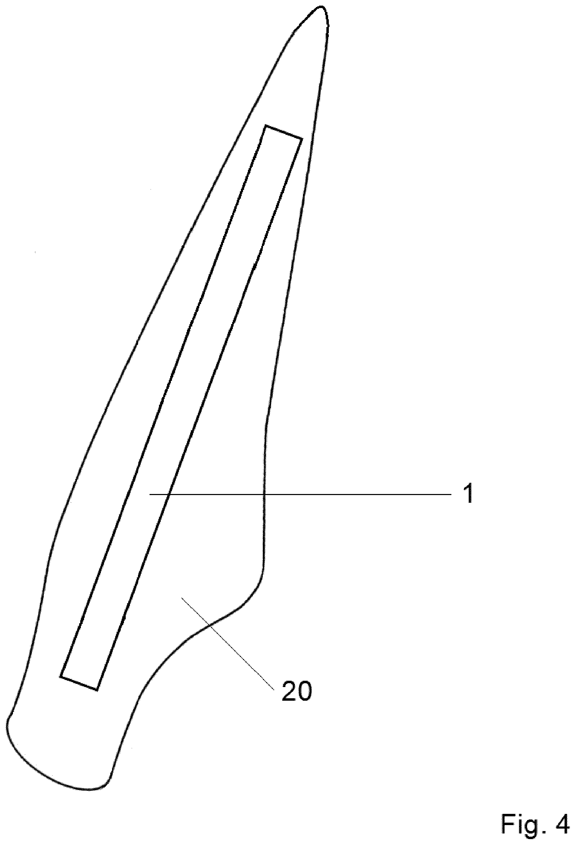

In Fig. 2 ist vorgesehen, auf die Formhalbschale 20 einer Rotorblatthalbschale das Pultrudat 1 an der für den Hauptgurt vorgesehenen Stelle aufzulegen. Das Pultrudat 1 verläuft entlang der gesamten Längsrichtung L der Formhalbschale 20 bis kurz vor den äußersten Tipabschnitt, aber nicht in den Tipabschnitt hinein, weil dieser zu schmal ist. Fig. 4 zeigt perspektivisch das als Hauptgurt in eine Rotorblatthalbschale 23 eingelegte Pultrudat 1. Es können noch weitere Gurte vorgesehen sein, die aber in Fig. 4 nicht dargestellt sind. Der Gurt kann nachträglich auf die bereits infundierte Rotorblatthalbschale 23 innenseitig aufgeklebt werden, es ist auch denkbar, dass das Pultrudat 1 auf oder zwischen Lagen eingebracht wird und der Aufbau dann gleichzeitig und zusammen infundiert wird.

Die Krümmung der Rotorblatthalbschale ist stark übertrieben dargestellt. Dennoch werden herkömmlicherweise Pultrudate 1 als im Querschnitt rechteckige Strangziehbauteile zur Verfügung gestellt, die, wenn sie auf der Rotorblatthalbschale aufliegen, nicht formschlüssig auf ihr aufliegen, sondern lediglich an der vorderen und hinteren Längskante 21, 22 auf der Formhalbschale 20 aufliegen. Während des Vakuuminfusionsverfahrens werden sie aber an die Formhalbschale 20 gesaugt, und es bildet sich eine intrinsische Spannung im Pultrudat 1 aus.

In Varianten eines Herstellungsverfahrens einer Rotorblatthalbschale werden zunächst Gelegelagen oder andere Lagen auf die Formhalbschale 20 aufgelegt und das Pultrudat 1 dann in Längsrichtung L zur Ausbildung des Vorderkantengurtes der Rotorblattschale auf die bereits aufgelegten Gelegelagen aufgelegt, und danach werden weitere Lagen, die sich entlang der bereits aufgelegten Lagen und der darauf aufgelegten Pultrudate 1 erstrecken, aufgelegt, die die Pultrudate 1 gleichsam oben und unten in Gelegelagen oder anderen Lagen einbetten. Daraufhin wird über den Aufbau aus Gelegelagen und Pultrudaten 1 eine Vakuumfolie gespannt und das ganze Halbzeug evakuiert und anschließend mit einem Zweikomponentenharz infundiert.

Das Zweikomponentenharz reagiert in einer exothermen Reaktion, und nach Durchschreiten eines sogenannten exothermen Peaks kann dem Zweikomponentenharz extern weiter Wärme von vorzugsweise beiden Seiten zugeführt werden, damit das Harzsystem vollständig aushärtet und vernetzt und eine feste Rotorblatthalbschale mit integriertem Pultrudat 1 als Hinterkantengurt oder Hauptgurt zur Verfügung gestellt wird. Durch das Ausbilden des Vakuums wird üblicherweise eine intrinsische Spannung in dem Pultrudat 1 erzeugt, mit der das Pultrudat 1 auf die gebogene Innenseite der Formhalbschale 20 gesaugt wird. Die intrinsische Spannung des Pultrudates 1 wird während des Infusionsverfahrens eingefroren und senkt die mechanische Stabilität des Rotorblattes herab.

Es ist daher vorgesehen, die Pultrudate 1 in einem Querschnitt nicht rechteckig bzw. mit einer geraden Auflagefläche zu versehen, sondern in einem Querschnitt senkrecht zur Längsrichtung L bereits gekrümmt auszubilden. Dazu ist eine Strangziehmaschine vorgesehen, die eine entsprechend ausgeformte Formmatrize 9, vorzugsweise im Härtungswerkzeug 8 zur Verfügung stellt. Die Formmatrize 9 bildet keinen exakten Rechteckquerschnitt des Pultrudates 1 aus, sondern ein Pultrudat 1 mit einem leicht gekrümmten Rechteckquerschnitt wie Fig. 3 zeigt.

Die Krümmung des Pultrudates 1 senkrecht zur Längsrichtung L ist der Krümmung der Innenwandung der Formhalbschale 20 zwischen Rotorblattnase und Rotorblatthinterkante angepasst, so dass das Rotorblatt möglichst vollflächig auf der Innenwandung der Formhalbschale 20 aufliegt. Da die Formhalbschale 20 in Längsrichtung L nicht überall die gleiche Krümmung aufweist, wird die Krümmung der Formmatrize 9 und damit die Krümmung des Pultrudates 1 so gewählt, dass sie der Durchschnittskrümmung der Auflagefläche des Pultrudates 1 auf der Formhalbschale 20 entspricht. Dazu wird entlang des Hauptgurtes in Längsrichtung L die durchschnittliche Krümmung in Richtung der Profilsehne, also zwischen Rotorblattnase und Rotorblatthinterkante, bestimmt, und mit dieser durchschnittlichen Krümmung wird die Formmatrize 9 des Härtungswerkzeuges 8 der Strangziehmaschine bestückt. Das Pultrudat 1, das über die gesamte Längsausdehnung L einen gleichbleibenden Querschnitt, also auch eine gleichbleibende Krümmung aufweisen muss, da anderenfalls das Strangziehverfahren an Stellen einer Querschnittsänderung unterbrochen werden müsste, wird dann gemäß Fig. 3 auf die Innenseite der Formhalbschale 20 aufgelegt.

Es ist erkennbar, dass zumindest in dem in Fig. 3 dargestellten Querschnitt von Formhalbschale 20 und Pultrudat 1 das Pultrudat 1 formschlüssig auf der Innenwandung der Formhalbschale 20 aufliegt. An anderen Stellen der Formhalbschale 20 kann es sein, dass das Pultrudat 1 nicht formschlüssig aufliegt. Auch das über die gesamte Ausdehnung gekrümmte Pultrudat 1 wird wie in der Fig. 2 wieder an die Innenwandung der Formhalbschale 20 angesaugt. Jedoch bilden sich aufgrund der Krümmung des Pultrudates 1 in Richtung der Profilsehne der Rotorblatthalbschale geringere Spannungen im Pultrudat 1 aus, die dann wiederum eingefroren werden, so dass die mechanische Stabilität des Rotorblattes gegenüber herkömmlichen Rotorblättern, die aus im Querschnitt rechteckförmigen Pultrudaten 1 gewonnen werden, vergrößert wird. Entsprechend gekrümmte Pultrudate 1 können auch zur Herstellung von Hinterkantengurten oder anderen Gurten Verwendung finden. Grundsätzlich ist das Verfahren auch für andere Bauteile von Rotorblättern verwendbar.

### Bezugszeichenliste

- 1: Pultrudat
- 2: Fasern
- 3: Matten
- 4: Faserspindeln

- 6: Rollen
- 7: Harzwanne und Vorformstation
- 8: Härtungswerkzeug
- 9: Formmatrize

- 11: Ziehwerkzeug
- 12: Sägemaschine

- 20: Formhalbschale
- 21: Längskante
- 22: Längskante

- 23: Rotorblatthalbschale

- L: Längsrichtung

## Patentansprüche

1. Verfahren zur Herstellung eines Rotorblattes, indem
wenigstens ein Pultrudat (1) in einem Strangziehverfahren gezogen wird,
wenigstens eine Formhalbschale zur Verfügung gestellt wird,
Lagen in die wenigstens eine Formhalbschale (20) eingelegt werden und das wenigstens eine Pultrudat (1) entlang einer Längsrichtung (L) der wenigstens einen Formhalbschale (20) in die Formhalbschale (20) eingelegt wird,
wobei das wenigstens eine Pultrudat (1) mit einer Krümmung senkrecht zur Längsrichtung (L) gezogen wird, **dadurch gekennzeichnet dass** eine Krümmung der Rotorblatthalbschale in Richtung einer Profilsehne bestimmt wird und die Krümmung des wenigstens einen Pultrudates (1) der Krümmung der Rotorblatthalbschale angepasst wird.

2. Verfahren nach Anspruch 1,
**dadurch gekennzeichnet, dass** die Lagen zur Rotorblatthalbschale infundiert werden und das Pultrudat (1) zu einem Gurt infundiert wird und dann auf die Rotorblatthalbschale (23) aufgebracht wird.

3. Verfahren nach Anspruch 1 oder 2,
**dadurch gekennzeichnet, dass** das Pultrudat (1) in oder auf die Lagen gelegt wird und gleichzeitig und zusammen mit den Lagen infundiert wird.

4. Verfahren nach einem der Ansprüche 1 bis 3,
**dadurch gekennzeichnet, dass** das Pultrudat (1) als Streifen gleichbleibender Breite und Dicke gezogen wird und die Krümmung in der Breite entlang der gesamten Längsausdehnung des Pultrudates (1) gleich gewählt wird.

5. Verfahren nach einem der Ansprüche 1 bis 4,
**dadurch gekennzeichnet, dass** die Krümmung des Pultrudates (1) als κ ≥ 1 *m*⁻¹ gewählt wird.

6. Verfahren nach einem der Ansprüche 1 bis 5,
**dadurch gekennzeichnet, dass** die Pultrudate (1) als Hauptgurte entlang der beiden Rotorblatthalbschalen verlegt werden.

7. Verfahren nach einem der Ansprüche 1 bis 6,
**dadurch gekennzeichnet, dass** die Pultrudate (1) als Hinterkantengurte entlang der beiden Rotorblatthalbschalen verlegt werden

8. Verfahren nach einem der Ansprüche 1 bis 7,
**dadurch gekennzeichnet, dass** die Krümmung des Pultrudates (1) entsprechend einer durchschnittlichen Krümmung der Auflagefläche des Pultrudates (1) in der Rotorblattschale gewählt wird.

9. Rotorblatt mit zwei Rotorblatthalbschalen und mindestens jeweils einem Gurt entlang einer Längsrichtung (L) jeder der beiden Rotorblatthalbschalen,
wobei ein Pultrudat (1) aus dem der Gurt gebildet ist, vor dem Laminieren in die Rotorblatthalbschale senkrecht zur Längsrichtung (L) eine Krümmung aufweist, **dadurch gekennzeichnet, dass** die Krümmung des Pultrudates (1) einer Krümmung der Rotorblatthalbschale senkrecht zur Längsrichtung (L) angepasst ist.

10. Rotorblatt nach Anspruch 9,
**dadurch gekennzeichnet, dass** das Pultrudat (1) entlang seiner Längsausdehnung überall in Richtung senkrecht zur Längsrichtung (L) gekrümmt ist.

11. Rotorblatt nach einem der Ansprüche 9 oder 10,
**dadurch gekennzeichnet, dass** die Krümmung des Pultrudates (1) bei κ ≥ 1 *m*⁻¹ liegt.

## Claims

1. Method for producing a rotor blade, at least one pultrudate (1) being pulled in a pultrusion process, at least one mould half-shell being provided, layers being inserted into the at least one mould half-shell (20) and the at least one pultrudate (1) being inserted into the mould half-shell (20) along a longitudinal direction (L) of the at least one mould half-shell (20), wherein the at least one pultrudate (1) is pulled with a curvature perpendicular to the longitudinal direction (L), **characterised in that** a curvature of the rotor blade half-shell is determined in the direction of a profile chord and the curvature of the at least one pultrudate (1) is adapted to the curvature of the rotor blade half-shell.

2. Method according to claim 1, **characterised in that** the layers are infused to the rotor blade half-shell and the pultrudate (1) is infused to a chord and is then applied to the rotor blade half-shell (23).

3. Method according to claim 1 or 2, **characterised in that** the pultrudate (1) is placed into or onto the layers and is infused simultaneously and together with the layers.

4. Method according to one of claims 1 to 3, **characterised in that** the pultrudate (1) is pulled as strips of constant width and thickness, and the curvature is chosen with the same width along the entire longitudinal extent of the pultrudate (1).

5. Method according to one of claims 1 to 4, **characterised in that** the curvature of the pultrudate (1) is chosen as κ ≥ 1 *m*⁻¹.

6. Method according to one of claims 1 to 5, **characterised in that** the pultrudates (1) are laid as main chords along the two rotor blade half-shells.

7. Method according to one of claims 1 to 6, **characterised in that** the pultrudates (1) are laid as trailing edge chords along the two rotor blade half-shells.

8. Method according to one of claims 1 to 7, **characterised in that** the curvature of the pultrudate (1) is chosen to correspond to an average curvature of the contact surface of the pultrudate (1) in the rotor blade shell.

9. Rotor blade having two rotor blade half-shells and at least one chord in each case along a longitudinal direction (L) of each of the two rotor blade half-shells, wherein a pultrudate (1) from which the chord is formed has a curvature before the lamination into the rotor blade half-shell perpendicular to the longitudinal direction (L), **characterised in that** the curvature of the pultrudate (1) is adapted to a curvature of the rotor blade half-shell perpendicular to the longitudinal direction (L).

10. Rotor blade according to claim 9, **characterised in that** the pultrudate (1) is curved throughout along its longitudinal extent in the direction perpendicular to the longitudinal direction (L).

11. Rotor blade according to one of claims 9 or 10, **characterised in that** the curvature of the pultrudate (1) is κ ≥ 1 *m*⁻¹.

## Revendications

1. Procédé pour la fabrication d'une pale de rotor, au moins un élément pultrudé (1) étant tiré dans un procédé d'extrusion par étirage, au moins une demi-coque moulée étant mise à disposition, des couches étant insérées dans la au moins une demi-coque moulée (20) et le au moins un élément pultrudé (1) étant inséré dans la demi-coque moulée (20) le long d'une direction longitudinale (L) de la au moins une demi-coque moulée (20), cependant que le au moins un élément pultrudé (1) est tiré avec une courbure perpendiculairement à la direction longitudinale (L), **caractérisé en ce qu'**une courbure de la demi-coque de pale de rotor est déterminée en direction d'une corde et que la courbure du au moins un élément pultrudé (1) est adapté à la courbure de la demi-coque de pale de rotor.

2. Procédé selon la revendication 1, **caractérisé en ce que** les couches sont perfusées vers la demi-coque de pale de rotor et l'élément pultrudé (1) est perfusé vers une courroie et est ensuite appliqué sur la demi-coque de pale de rotor (23).

3. Procédé selon la revendication 1 ou 2, **caractérisé en ce que** l'élément pultrudé (1) est mis dans ou sur les couches et est perfusé simultanément et conjointement avec les couches.

4. Procédé selon l'une des revendications 1 à 3, **caractérisé en ce que** l'élément pultrudé (1) est tiré comme bande de largeur et d'épaisseur constante et que la courbure est choisie égale dans la largeur le long de l'ensemble de l'extension en longueur de l'élément pultrudé (1).

5. Procédé selon l'une des revendications 1 à 4, **caractérisé en ce que** la courbure de l'élément pultrudé (1) est choisie de κ ≥ 1 *m*⁻¹.

6. Procédé selon l'une des revendications 1 à 5, **caractérisé en ce que** les éléments pultrudés (1) sont posés comme des courroies principales le long des deux demi-coques de pale de rotor.

7. Procédé selon l'une des revendications 1 à 6, **caractérisé en ce que** les éléments pultrudés (1) sont posés comme des courroies de bord arrière le long des deux demi-coques de pale de rotor.

8. Procédé selon l'une des revendications 1 à 7, **caractérisé en ce que** la courbure de l'élément pultrudé (1) est choisie en correspondant à une courbure moyenne de la surface d'appui de l'élément pultrudé (1) dans la demi-coque de pale de rotor.

9. Pale de rotor avec deux demi-coques de pale de rotor et au moins respectivement une courroie le long d'une direction longitudinale (L) de chacune des deux demi-coques de pale de rotor, cependant qu'un élément pultrudé (1) à partir duquel la courroie est formée présente une courbure avant le laminage dans la demi-coque de pale de rotor perpendiculairement à la direction longitudinale (L), **caractérisée en ce que** la courbure de l'élément pultrudé (1) est adaptée à la courbure de la demi-coque de pale de rotor perpendiculairement à la direction longitudinale (L).

10. Pale de rotor selon la revendication 9, **caractérisée en ce que** l'élément pultrudé (1) est courbé le long de son extension en longueur partout en direction perpendiculairement à la direction longitudinale (L).

11. Pale de rotor selon l'une des revendications 9 ou 10, **caractérisée en ce que** la courbure de l'élément pultrudé (1) est choisie de κ ≥ 1 *m*^{-l}.
